# NEW EUROPEAN PATENT SPECIFICATION

(11) **EP 0 486 085 B2**
(45) Date of publication and mention of the opposition decision: **13.10.2004**
(45) Mention of the grant of the patent: 20.07.1994
(21) Application number: 91202843.8
(22) Date of filing: 01.11.1991
(51) Int. Cl.: B62J 3/00, G10K 1/072

(54) **Bicycle bell**
Fahrradglocke
Sonnette pour bicyclette

(30) Priority: 15.11.1990 NL 9002488
(43) Date of publication of application: 20.05.1992
(73) Proprietor: Spanninga Metaal B.V., 8501 MK Joure (NL)
(72) Inventor: Hosper, Alle, NL-8512 AD Broek (NL)
(74) Representative: Dorna, Peter

(56) References cited:
- FR-A- 2 346 798
- JP-U- 349 110
- NL-A- 8 301 969

## Description

The invention relates to a bicycle bell provided with a bracket to be mounted on handlebars or the like, according the pre-characterising part of claim 1.

For many decades bicycle bells have been known that are provided with a rack secured to a reciprocating operating means, said rack via a pinion imparting a reciprocating movement to striking means. Such a bicycle bell is composed of a comparatively large number of parts, which makes it comparatively costly and its construction vulnerable.

From NL-A-8301969 a bicycle bell is known with a reciprocating operating means which is connected, by means of two curved flexible connecting arms, to a bracket to be mounted on handlebars or the like. Two flexible striking arms are furthermore coupled to the operating means, said arms at opposite ends being provided with hammer heads, whose purpose it is to strike against the inner side of the cap during the reciprocating movement of the operating means. The striking means are thereby set in motion by means of a cam connected to the operating means which, during the reciprocating movement of the operating means, engages with a projection secured to the bracket.

Generally each hammer head will strike the inside of the cap once during each reciprocating movement of the operating means, so that only little sound will be produced with each reciprocating movement of the operating means.

During the reciprocating movement of the operating means the connecting means will furthermore reach a position in which they project beyond the outer circumference of the cap. As a result of this a gap is formed between the lower edge of the cap and the connecting means located thereunder, and there is a real danger that one of the fingers of the user of such a bicycle bell will become stuck in this gap.

The object of the invention is to achieve a bicycle bell of the above kind, which is of simple construction, which is user-friendly and which has an effective sound production.

According to the invention this can be achieved in a bicycle bell according claim 1.

When using the construction according to the invention the operating means can be rotated in one and the same direction so as to pivot the arm carrying the striking means.

A bicycle bell according to the invention may be built up of a comparatively small number of parts and be at least substantially made of a plastic material, resulting in a simple, corrosion resistant construction of the bicycle bell.

It is noted that from FR-A-2346798 a bicycle bell is known which is provided with a conical membrane, at whose top a pin is provided, which is struck by contact elements mounted on a rotatable disc so as to set the conical membrane vibrating and thus produce the desired sound. The disc can be rotated, via a one-way coupling, by means of a handle of the bicycle bell. Also this bicycle bell, which is built up of a large number of different parts, is of complicated construction.

The bicycle bell known from JP-SHO 63-70027 comprises a ball shaped striking means co-operating directly with the toothing provided on the inner circumference of the operating means. The end of the arm remote from the striking means has been fixed to a further arm extending substantially parallel to the arm whereon the striking means have been mounted and with his end remote from the first arm being coupled to the bracket. In said Japanese reference there have been shown also an embodiment wherein arms supporting the striking means at their free ends, are fixed to a rotatable operating means, whereby said striking means co-operate with tooths provided on the inner circumference of a cap.

The invention will be explained in more detail hereafter with reference to a possible embodiment of the construction according to the invention diagrammatically illustrated in the accompanying Figures.
Figure 1 is a cross-section of a bicycle bell according to the invention.
Figure 2 is a plan view of Figure 1, wherein the cap and part of the operating means have been left out.
Figure 3 is a plan view of the bracket.
Figure 4 is a side view of Figure 3.
Figure 5 is a perspective view of the bracket and the operating means, illustrated spaced from each other.

The bicycle bell shown in the Figures is at least substantially built up of a bracket 1, an operating means 2, which is rotatable about said bracket 1, and a cap 3 mounted on the bracket 1.

The bracket 1 is provided with a centrally located, slightly conical sleeve 4, which is provided with an inwardly projecting collar 5 at its upper side.

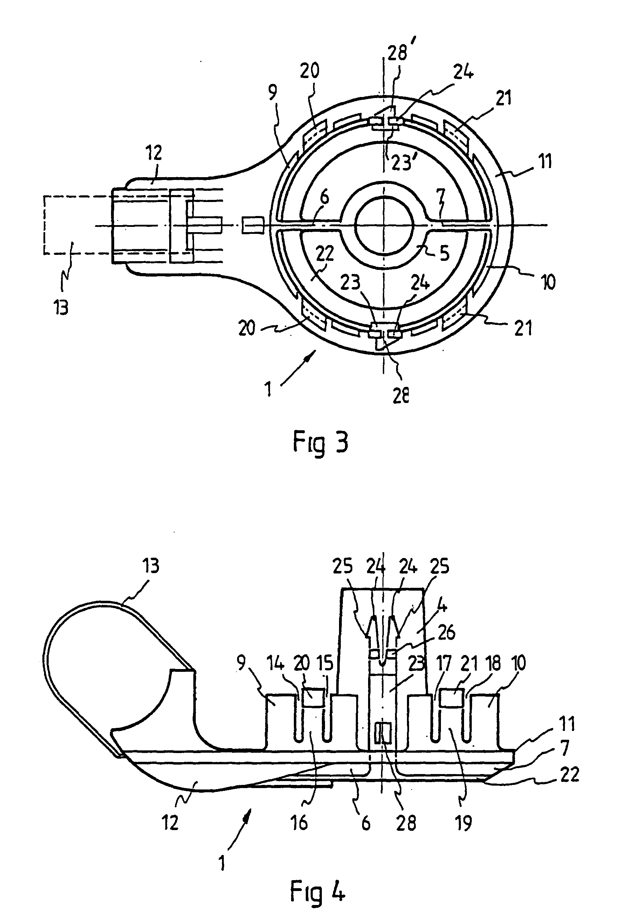

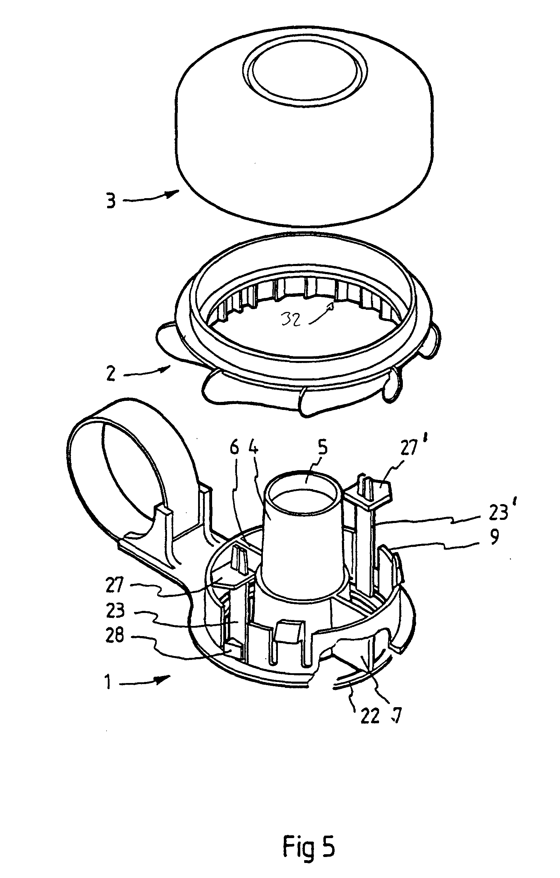

The lower end of said sleeve is connected, by means of two vertically upright ribs 6 and 7 being in line and extending diametrically outward from the sleeve, to two sector-shaped wall parts 9 and 10 respectively, which extend concentrically about the central axis 8 of the sleeve. At their lower ends said wall parts are secured to an annular part 11 of the bracket 1. Said annular part 11 is integral with an arm 12 extending radially outwards from said annular part 11 (Figures 3 and 4), and to which a clamping strap 13 is secured. The bracket 1 can be clamped on the handlebars of a bicycle or the like by means of the arm 12 and the clamping strap 13.

Slotted holes 14 and 15, extending downward from the upper edge of the wall part and being spaced from each other by some distance, are provided near the two ends of the wall part 9, said slotted holes bounding an upwardly extending finger 16. In a similar manner upwardly extending fingers 19 are recessed, by means of vertically extending slotted holes 17 and 18, near the ends of the wall part 10. Outwardly extending noses 20 and 21 are formed on the upper ends of the fingers 16 and 19 respectively.

As appears in particular from Figure 5, the lower ends of the ribs 6 and 7 are located below the lower boundary edges of the sector-shaped wall parts 9 and 10. A ring 22, which extends concentrically around the central axis 8 of the bracket and which likewise forms part of said bracket, joins the lower ends of said ribs 6 and 7.

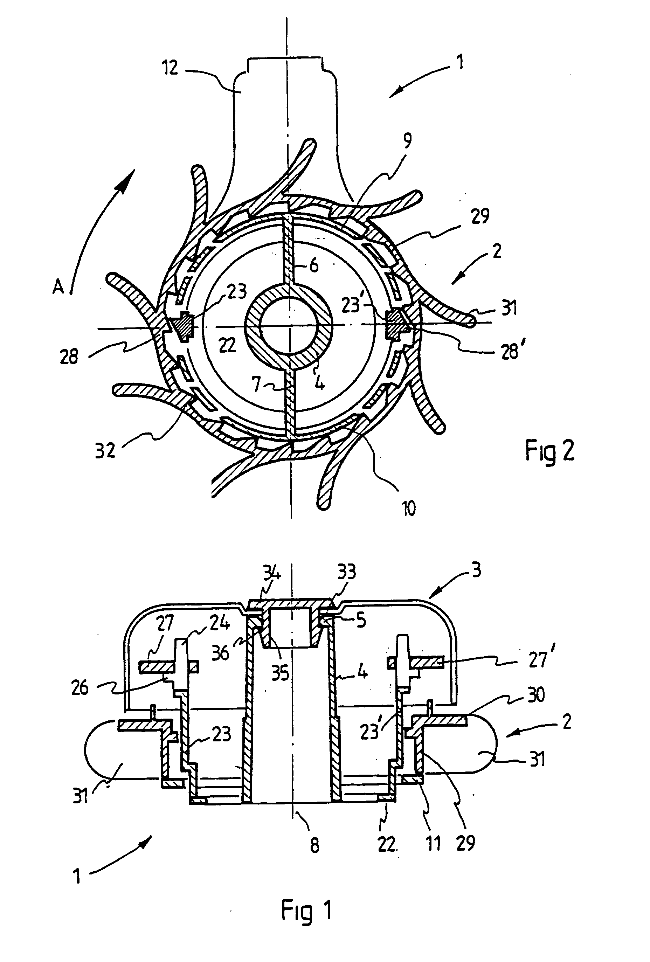

The lower ends of two upwardly extending arms 23, 23', which are integral with the ring 22, join said ring 22 in two diametrically opposed points, which are turned through 90° with respect to the ribs 6 and 7 when seen in plan view (Figure 2).

The upper part of each arm 23, 23' is split, so that this upper end of the arm is formed by two fingers 24, which are provided with projections 25 at their sides remote from each other. Near the lower ends of the fingers outwardly extending supporting stops 26 are provided on said fingers. Metal plates 27, 27' forming striking means are mounted on the upper ends of the arms 23, 23'. To this end each metal plate is provided with a hole, into which the resilient fingers 24 are inserted, the construction being such that each plate 27, 27' rests on the supporting stops 26 and is retained between the supporting stops 26 in question and the projections 25 projecting above the plate 27, 27'.

Cams 28, 28' of triangular section are furthermore secured to the outside of the arms 23, 23', in points just above the annular means 11.

The above-described bracket means is made in one piece of a plastic material, the construction being such that the arms 23, 23' can move resiliently by deformation of the ring 22 and/or deformation of the arms 23, 23' themselves, in a direction towards and away from the sleeve 4.

The operating means comprises a circular part 29 extending concentrically around the central axis 8, and a flange 30 extending outwards from the upper edge of said circular part 29. A number of outwardly extending wing-shaped means 31, which extend beyond the flange 30, abut the outer side of the circular part 29 and the lower side of the flange 30. In the assembled position of the bicycle bell illustrated in Figure 1 the lower edge of the circular part 29 of the operating means 2 rests on the annular part 11 of the bracket 1. When the circular part 29 of the operating means 2, which extends concentrically around the wall parts 9 and 10, is being mounted, the circular part 29 is moved downwards along said wall parts, whereby initially the noses 20 and 21 are pushed away in the direction of the sleeve 4, until said noses 20 and 21 are released again and spring back so as to enclose the upper edge of the operating means 2, as a result of which this operating means 2 is secured against axial movement with respect to the bracket 1, since the operating means 2 is retained between the annular part 11 and the noses 20 and 21 of the bracket 1.

Nineteen regularly spaced teeth 32 of triangular section are formed on the inner circumference of the circular part 29 of the operating means. As appears in particularfrom Figure 2, the tips of these teeth abut against the outer circumference of the wall parts 9 and 10 of the operating means.

The operating means can now be rotated with respect to the bracket, in the direction according to the arrow A, by exerting a force with a thumb or a finger on one of the wing-shaped means 31 in the direction according to the arrow A. In will be apparent, in particular from Figure 2, that when a tooth 32 passes an arm 23 or 23', the tooth 32 in question will come into contact with the cam 28 or 28' secured to the relevant arm 23 or 23', as a result of which this cam is pushed away by the tooth 32, in the direction of the sleeve 4. After the tooth 32 in queston has passed the cam 28 or 28' the arm 23 or 23' in question will spring back again, as a result of the spring force of the annular means 22 and the arm 23 or 23' resp., as the case may be, towards and beyond the position illustrated in Figure 3. As will furthermore be apparentfrom Figure 2, the configuration of the cam 28, 28' and tooth 32 is such that the operating means 2 can only be rotated with respect to the bracket 1 in the direction according to the arrow A, whilst upon rotation of the operating means 2 in the direction according to the row A a reciprocating movement will alternately be imparted to the two arms 23 and 23' with the striking means 27, 27' secured to the upper ends of said arms 23, 23'.

The cap 3 has a central hole, whereby the boundary edge 33 of said hole, which forms part of said cap, rests on top of the collar 5. The cap 3 is thereby secured to the sleeve 4 by means of a resilient locking means, which is provided with a disc-shaped part 34 resting on top of the cap and a shaft 35 being integral therewith, said shaft being provided with a nose 36 snapped under the collar 5. Thus the metal cap 3 is fixed to the bracket 1 in a simple and efficient manner.

It will be apparent that when the arms 23, 23', with the striking means 27, 27' secured thereto, are reciprocated by rotation of the operating means 2, said striking means 27, 27' will strike the inner side of the cap 3 so as to produce the sound desired for a bicycle bell.

As already said before, the arms 23 and 23' are alternately reciprocated; this as a consequence of the fact that nineteen teeth 32 are provided, and that the arms 23 and 23' are diametrically opposed. As a result of this it is effected that at the moment when e.g. the cam 28 secured to the arm 23 is released from the tooth 32 in question, after having been pivoted in the direction of the central axis of the bell, and the striking means 27 in question strikes the bell shell 3 so as to produce sound, the arm 23' is pivoted by another tooth in the direction of the central axis of the bell. This results is a certain slowing down of the rotation of the operating means in the direction according to the arrow A, so that the striking means 27 has sufficient time to strike the bell shell or cap 3 and produce sound. Then the cap 3 will first be struck by the striking means 27' and then by the striking means 27, so that during every rotation of the operating means the cap 3 will be struck a comparatively large number of times.

It will be apparent, that the same effect can be achieved when the number of teeth 32 is even and when the location of the arms 23 and 23' opposite each other is non-symmetric.

Furthermore it is possible to use only one arm or more than two arms.

With the exception of the cap 3 and the striking means 27, 27' the bicycle bell may be completely made of a plastic material. The bicycle bell is thereby built up of only a limited number of simply produced parts, so that when the construction according to the invention is used a simple and inexpensively produced bicycle bell can be obtained, which can be assembled in a simple manner.

## Claims

1. A bicycle bell provided with a bracket (1) to be mounted on handlebars or the like, with a cap (3) mounted on said bracket with an operating means (2) supported by said bracket (1) and rotatable about an axis of rotation (8) and with at least two striking means (27, 27'), each of said striking means (27, 27') being mounted on an arm (23, 23') which extends at least substantially parallel to the axis of rotation (8) of said operating means (2) and which can be set in motion against spring force by rotating said operating means (2) having a toothing (32) provided on the inner circumference of the annular operating means and co-operating with the arms (23, 23') in such a manner, that said striking means (27, 27') strike the inner side of the cap so as to produce sound during rotation of the annular operating means, whereby each striking means (27, 27') is supported by a single substantially straight arm (23, 23') which near its end remote from the striking means has been coupled to the bracket (1), whilst a cam (28, 28') is secured to the arm (23, 23'), which cam co-operates with the toothing (32) provided on the inner circumference of the annular operating means (2), whereby the construction of said arms (23, 23') carrying the striking means (27, 27') and the operating means (2) is such, that upon rotation of the operating means (2) the cams (28, 28') secured to the arms (23, 23') are alternately engaged by a tooth (32) of the operating means.

2. A bicycle bell according claim 1, **characterized in that** each tooth (32) of the operating means has a boundary surface extending in a substantially radial direction with respect to the axis of rotation (8) of said operating means (2).

3. A bicycle bell according to claims 1 or 2, **characterized in that** said operating means has an uneven number of teeth (32) and that furthermore two arms (23, 23') are provided, which are disposed diametrically opposite each other.

4. A bicycle bell according to any one of the preceding claims, **characterized in that** said bracket (1) is provided with first annular means (11) secured to a central sleeve (4), said annular means (11) being provided with wall parts (9, 10) extending concentrically around the central axis (8) of said sleeve, whilst said operating means (2) rests on the annular means of the bracket and extends concentrically around said wall parts.

5. A bicycle bell according to claim 4, **characterized in that** the toothing (32) active on the inner side of the operating means abuts against the wall parts of the bracket.

6. A bicycle bell according to claim 5 or 6, **characterized in that** the wall parts (9, 10) of the bracket are provided with resilient noses (20, 21) which enclose the operating means in the mounted condition of the bicycle bell.

7. A bicycle bell according to any one of the preceding claims, **characterized in that** the upwardly extending arms (23, 23') join a second annular means (22) being integral therewith in two diametrically opposite points, said second annular means (22) being coupled to the remaining part of the bracket in two points turned through 90° with respect to the connecting points of the arms.

8. A bicycle bell according to any one of the preceding claims, **characterized in that** the upper end of one arm is split, so as to form two fingers (24) which are resiliently movable with respect to each other, said fingers being provided with projections (25), between which a striking means slid over said resilient fingers is retained.

9. A bicycle bell according to any one of the preceding claims, **characterized in that** the construction of the toothing (32) provided on the inner side of the operating means (2) and the cams (28, 28') provided on the arms (23, 23') carrying the striking means (27, 27'), which co-operate therewith, is such that the operating means can only be rotated in one direction with respect to the carrier.

10. A bicycle bell according to any one of the preceding claims, **characterized in that** a number of outwardly extending wing-shaped means (31) are provided on the outer circumference of the operating means (2).

11. A bicycle bell according to any one of the claims 5 - 11, **characterized in that** said cap (3) rests on the upper end of the sleeve (4) and is secured to said sleeve by means of a locking means (34, 35) passed through a hole in said cap, said locking means being anchored to the sleeve by means of a snap connection (36).

12. A bicycle bell according to any one of the claims 5-12, **characterized in that** said first annular means (11) is connected to the central sleeve (4) by means of two ribs (6, 7) being in line and extending radially with respect to said sleeve.

13. A bicycle bell according to claim 12, **characterized in that** said second annular means (22) abuts the lower edges of the wall parts (9, 10)

## Patentansprüche

1. Fahrradglocke mit einem Träger (1), der an einer Lenkstange o.ä. montierbar ist mit einer am Träger montierten Kappe (3) mit eine Betätigungseinrichtung (2), welche vom Träger (1) gelagert wird und um eine Drehachse (8) drehbar ist und mindestens zwei Schlageinrichtungen (27, 27') die jeder an einem Arm (23, 23') montiert sind, der sich zumindest im wesentlichen parallel zur Drehachse (8) der Betätigungseinrichtung (2) erstreckt und gegen eine Federkraft in Bewegung gesetzt werden kann durch drehen der Betätigungseinrichtung (2) mit eine Zahnung (32) die am Innenumfang der ringförmigen Betätigungseinrichtung vorgesehen ist, und derart mit der Armen (23, 23') zusammenwirkt, daß die Schlageinrichtung (27, 27') gegen die Innenseite der Kappe schlägt um während drehen der Betätigungseinrichtung ein Geräusch zu erzeugen, wobei jeder Schlageinrichtung (27, 27') durch ein einzige haubtsachlich rechte Arm (23, 23') getragen wird sowie in der Nähe seines von der Schlageinrichtung entfernten Endes mit dem Träger (1) verbunden ist, wobei ein Nocken (28, 28') am Arm befestigt ist, der mit der Zahnung (32) zusammenwirkt, die am Innenumfang der ringförmigen Betätigungseinrichtung (2) vorgesehen ist, wobei die Konstruktion der die Arme tragenden Schlageinrichtung und der Betätigungseinrichtung derart ist, daß bei einer Drehung der Betätigungseinrichtung die an den Armen (23, 23') befestigten Nocken (28, 28') abwechselnd mit einem Zahn (32) der Betätigungseinrichtung in Eingriff treten.

2. Fahrradglocke nach Anspruch 1, **dadurch gekennzeichnet daß** jeder Zahnung (32) der Betätigungseinrichtung ein Grenzflach hat daß sich erstreckt in eine im wesentlichen radiale Richtung hinsichtlich der Drehachse (8) der Betätigungseinrichtung (2).

3. Fahrradglocke nach einem der Ansprüche 1 oder 2, **dadurch gekennzeichnet daß** die Betätigungseinrichtung eine ungerade Anzahl von Zähnen (32) besitzt und daß desweiteren zwei Arme (23, 23') vorgesehen sind, die diametral entgegengesetzt zueinander angeordnet sind.

4. Fahrradglocke nach einem der vorangehenden Ansprüche, **dadurch gekennzeichnet, daß** der Träger (1) mit einer ersten Ringeinrichtung (11) versehen ist, die an einer zentralen Buchse (4) befestigt ist und mit Wandteilen (9, 10) versehen ist, die sich konzentrisch um die Mittelachse (8) der Buchse erstrecken, wobei die Betätigungseinrichtung (2) auf der Ringeinrichtung des Trägers gelagert ist und sich konzentrisch um die Wandteile erstreckt.

5. Fahrradglocke nach Anspruch 4, **dadurch gekennzeichnet daß** die auf der Innenseite der Betätigungseinrichtung aktive Zahnung (32) gegen die Wandteile der Trägers stößt.

6. Fahrradglocke nach Anspruch 4 oder 5, **dadurch gekennzeichnet, daß** die Wandteile (9, 10) des Trägers mit elastischen Nasen (20, 21) versehen sind, die die Betätigungseinrichtung im montierten Zustand der Fahrradglocke umgeben.

7. Fahrradglocke nach einem der vorangehenden Ansprüche, **dadurch gekennzeichnet, daß** die aufwärts verlaufenden Arme (23, 23') mit einer zweiten Ringeinrichtung (22) verbunden sind, die damit in zwei diametral gegenüberliegenden Punkten einstückig ausgebildet ist, wobei diese zweite Ringeinrichtung (22) in zwei Punkten, die um 90° relativ zu den Verbingungspunkten der Arme gedreht sind, mit dem restlichen Teil des Trägers gekoppelt ist.

8. Fahrradglocke nach einem der vorangehenden Ansprüche, **dadurch gekennzeichnet, daß** das obere Ende eines Armes geteilt ist, so daß zwei Finger (24) gebildet sind, die relativ zueinander elastisch bewegbar und mit Vorsprüngen (25) versehen sind, zwischen denen eine Schlageinrichtung, die über die elastischen Finger geschoben ist, gehalten wird.

9. Fahrradglocke nach einem der vorangehenden Ansprüche, **dadurch gekennzeichnet, daß** die Konstruktion der an der Innenseite der Betätigungseinrichtung (2) vorgesehen Zahnung (32) und der an den von der Schlageinrichtung (27, 27') getragenen Armen (23, 23') vorgesehenen Nocken (28, 28'), die damit zusammenwirken, derart ist, daß die Betätigungseinrichtung relativ zum Träger nur in einer Richtung gedreht werden kann.

10. Fahrradglocke nach einem der vorangehenden Ansprüche, **dadurch gekennzeichnet, daß** eine Reihe von auswärts verlaufenden flügelförmigen Einrichtungen (31) am Außenumfang der Betätigungseinrichtung (2) vorgesehen ist.

11. Fahhradglocke nach einem der Ansprüche 4 bis 10, **dadurch gekennzeichnet, daß** die Kappe (3) auf dem oberen Ende der Buchse (4) gelagert und mit Hilfe einer Verriegelungseinrichtung (34, 35) an der Buchse befestigt ist, die sich durch ein Loch in der Kappe erstreckt und mit Hilfe einer Schnappverbindung (36) mit der Buchse verankert ist.

12. Fahrradglocke nach einem der Ansprüche 4 bis 11, **dadurch gekennzeichnet, daß** die erste Ringeinrichtung (11) mit Hilfe von zwei Rippen (6, 7) mit der zentralen Buchse (4) verbunden ist, die in einer Linie liegen und sich relativ zur Buchse radial erstrecken.

13. Fahrradglocke nach Anspruch 12, **dadurch gekennzeichnet, daß** die zweite Ringeinrichtung (22) gegen die unteren Ränder der Wandteile (9, 10) stößt.

## Revendications

1. Sonnette pour bicyclette pourvue d'une console (1) pour être montée sur des guidons ou analogue, avec un capuchon (3) monté sur ladite console avec un moyen de commande (2) supporté par ladite console (1) et tournant autour d'un axe de rotation (8) et avec au moins deux moyens de frappe (27, 27') qui sont chaque monté sur un bras (23, 23') s'étendant au moins de façon presque parallèle à l'axe de rotation (8) du moyen de commande (2) et pouvant être mis en déplacement contre l'effet d'un ressort grâce a la rotation, dudit moyen de commande (2) avec une denture (32) prévue sur al circonférence interne du moyen de commande annulaire et qui coopère avec les bras (23, 23') de telle façon que ledit moyen de frappe (27, 27') frappe la face interne du capuchon afin de produire un son pendant la rotation du moyen de commande, chaque moyen de frappe être supporté par une seul bras (23, 23') presque droit, ledit bras (23, 23') à proximité de son extrémité éloignée du moyen de frappe étant couplé à la console (1), tandis qu'une came (28, 28') est fixée sur le bras, laquelle came coopère avec la denture (32) prévue sur la circonférence interne du moyen de commande annulaire, la construction desdits bras supportant des moyens de frappe et le moyen de commande être telle que pendant la rotation du moyen de commande, les cames (28, 28') fixées sur les bras (23, 23') sont alternativement en prise avec une dent (32) du moyen de commande.

2. Sonnette pour byciclette selon la revendication 1, characterisée en ce que chaque dent (32) du moyen de commande a une surface de frontière s'étendant presque radial a l' égard de l'axe de rotation (8) du moyen de commande (2).

3. Sonnette pour bicyclette selon l'une quelconque des revendications 1 ou 2, **caractérisée en ce que** ledit moyen de commande dispose d'un nombre irrégulier de dents (32) et que, de plus, deux bras (23, 23') sont prévus, lesquels sont disposés de façon diamétralement opposée l'un par rapport à l'autre.

4. Sonnette pour bicyclette selon l'une quelconque des revendications précédentes, **caractérisée en ce que** ladite console (1) est pourvue d'un premier moyen annulaire (11) fixé sur un fourreau central (4), ledit moyen annulaire (11) étant pourvu de parties de paroi (9, 10) s'étendant concentriquement autour de l'axe central (8) dudit fourreau, tandis que ledit moyen de commande (2) repose sur le moyen annulaire de la console et s'étend concentriquement autour desdites parties de paroi.

5. Sonnette pour bicyclette selon la revendication 4, **caractérisée en ce que** la denture (32) active sur la face interne du moyen de commande s'appuie contre les parties de paroi de la console.

6. Sonnette pour bicyclette selon la revendication 4 ou 5, **caractérisée en ce que** les parties de paroi (9, 10) de la console sont pourvues de becs élastiques (20, 21) qui maintiennent le moyen de commande à l'état assemblé de la sonnette de bicyclette.

7. Sonnette pour bicyclette selon l'une quelconque des revendications précédentes, **caractérisée en ce que** les bras (23, 23') s'étendant vers le haut relient un second moyen annulaire (22) faisant partie intégrante de ceux-ci en deux points diamétralement opposés, ledit second moyen annulaire (22) étant couplé à la partie fixe de la console en deux points décalés de 90° par rapport aux points de liaison des bras.

8. Sonnette pour bicyclette selon l'une quelconque des revendications précédentes, **caractérisée en ce que** l'extrémité supérieure d'un bras est fendue, de façon à former deux doigts (24) qui sont mobiles l'un part rapport à l'autre de façon élastique, lesdits doigts étant pourvus de saillies (25), entre lesquelles un moyen de frappe glissant sur lesdits doigts élastiques est retenu.

9. Sonnette pour bicyclette selon l'une quelconque des revendications précédentes, **caractérisée en ce que** la construction de la denture (32) prévue sur la face interne du moyen de commande (2) et des cames (28, 28') prévues sur les bras (23, 23') supportant les moyens de frappe (27, 27') qui co-opèrent avec celle-ci est telle que le moyen de commande peut être tourné seulement dans un sens par rapport au support.

10. Sonnette pour bicyclette selon l'une quelconque des revendications précédentes, **caractérisée en ce qu'**un certain nombre de moyens en forme d'aile (31) s'étendant vers l'extérieur sont prévus sur la circonférence externe du moyen de commande (2).

11. Sonnette pour bicylcette selon l'une quelconque des revendications 4 à 10, **caractérisée en ce que** ledit capuchon (3) repose sur l'extrémité supérieure du fourreau (4) et est fixé sur ledit fourreau à l'aide d'un moyen de blocage (34, 35) inséré à travers un oficice dudit capuchon, ledit moyen de blocage étant ancré sur le fourreau à l'aide d'un assemblage à enclechement (36).

12. Sonnette pour bicyclette selon l'une quelconque des revendications 4 à 11, **caractérisée en ce que** ledit premier moyen annulaire (11) est relié au fourreau central (4) à l'aide de deux nervures (6, 7) alignées et s'étendant dans le sens radial par rapport audit fourreau.

13. Sonnette pour bicyclette selon la revendication 12, **caractérisée en ce que** ledit second moyen annulaire (22) s'appuie sur le bord inférieur desdites parties de paroi (9, 10).
